# EUROPÄISCHE PATENTSCHRIFT

(11) **EP 0 598 174 B1**
(45) Veröffentlichungstag und Bekanntmachung des Hinweises auf die Patenterteilung: **18.06.1997**
(21) Anmeldenummer: 93104506.6
(22) Anmeldetag: 19.03.1993
(51) Int. Cl.: F01D 17/16

(54) **Abgasturbolader für eine Brennkraftmaschine**
Turbo charger for a combustion engine
Turbosoufflante pour une machine à combustion interne

(30) Priorität: 14.11.1992 DE 4238550
(43) Veröffentlichungstag der Anmeldung: 25.05.1994
(73) Patentinhaber: Daimler-Benz Aktiengesellschaft, 70546 Stuttgart (DE)
(72) Erfinder: Sumser, Siegfried, Dipl.-Ing., W-7000 Stuttgart 1 (DE); Schmidt, Erwin, W-7066 Baltmannsweiler (DE); Erdmann, Wolfgang, W-7000 Stuttgart 40 (DE); Fränkle, Gerhard, Dr.-Ing., W-7064 Remshalden (DE)

(56) Entgegenhaltungen:
- CH-A- 390 948
- DE-A- 2 843 202
- DE-C- 3 427 715
- FR-A- 1 183 580
- FR-A- 1 380 659
- US-A- 2 935 295
- US-A- 3 137 477

## Beschreibung

Die Erfindung betrifft ein variables Leitgitter für einen Abgasturbolader einer Brennkraftmaschine gemäß dem Oberbegriff des Patentanspruchs 1.

Aus der DE-PS 34 27 715 ist bereits ein variables Leitgitter für einen Abgasturbolader einer Brennkraftmaschine der gattungsgemäßen Art bekannt.

Der Abgasturbolader besitzt einen zweiflutigen, spiralförmigen Leitkanal, wobei die eine Flut radial und die andere Flut diagonal an das Laufrad mündet. In beiden an das Laufrad mündenden Fluten befinden sich in deren Mündungsbereich variable Leitgitter mit an dessen Umfang angeordneten ungeteilten Leitschaufeln, wobei jede Leitschaufel um eine Leitschaufellängsachse drehbar gelagert ist.

Ferner ist aus der DE-OS 28 43 202 ein Abgasturbolader mit einem Radialrad, das von einem spiralförmigen Leitkanal umgeben wird, bekannt. Im Mündungsbereich des Leitkanals ist eine ringförmige Trennwand axialfest angeordnet, die an ihrem Umfang verteilte, düsenförmige Durchbrechungen aufweist, die aus der zum Radialrad tangentialen Richtung in Richtung auf die Achse des Radialrades geneigt sind. Der ringförmigen Trennwand ist eine in Umfangsrichtung verschiebbare Blende vorgeordnet, durch die die düsenförmigen Durchbrechungen in ihrem Querschnitt einstellbar sind.

Bisher bekannte variable Leitgitter von Abgasturboladern der gattungsgemäßen Art haben einen verhältnismäßig komplizierten Aufbau, da eine Verstellmechanik für die Bewegung jeder einzelnen Leitschaufel des Leitgitters benötigt wird. Derartige Leitgitter sind daher teuer und nur mit vergleichsweise hohem Aufwand betriebssicher.

Ferner treten bei einer stärkeren Verringerung des Strömungsquerschnittes bei der Verstellung der Leitschaufeln durch die beschleunigte Strömung erhebliche Schwingungsprobleme an den Leitschaufeln auf.

Der Erfindung liegt die Aufgabe zugrunde, ein gattungsgemäßes Leitgitter mit einem einfacheren Aufbau gegenüber bekannten Ausführungen bei gleichzeitiger Erhöhung dessen Betriebssicherheit auszubilden.

Die Aufgabe ist erfindungsgemäß durch die im Kennzeichen des Hauptanspruches gegebenen Merkmale gelöst.

Ein Vorteil der erfindungsgemäßen Anordnung des variablen Leitgitters liegt darin, daß eine Steigerung der Betriebssicherheit durch eine wesentliche Reduzierung der Zahl der beweglichen Bauteile des Leitgitters erzielt wird.

Durch die Ausgestaltung der Erfindung nach Anspruch 4 entsteht eine besonders einfache und kostengünstige Variante des geteilten Leitgitters.

Eine aerodynamisch günstige Gitterausführung bietet die erfindungsgemäße Ausgestaltung des Leitgitters nach den Ansprüchen 5, 6 und 7. Bei voll geöffnetem Leitgitter befindet sich die Teilungsfuge des geteilten Leitgitters auf der weniger ablösegefährdeten Druckseite der Leitschaufeln, da durch den Krümmungsverlauf der Druckseite der Leitschaufeln eine sich in deren Teilungsfugenbereich ablösende Strömung die Tendenz hat, sich stromab wieder an die Leitschaufeln anzulegen. Die ablösegefährdete Saugseite der Leitschaufeln ist spaltlos durchgängig ausgeführt, um hier eine durch einen Spalt hervorgerufene lokale Strömungsablösung zu verhindern.

Durch die erfindungsgemäße Ausgestaltung nach Anspruch 8 kann durch die Regelung des Durchflußquerschnittes über das verdrehbare Leitgitterteil dieses auch als Motorbremse eingesetzt werden. Bei geeigneter Wahl der Gitterparameter kann das Leitgitter so ausgeführt werden, daß es, abgesehen von Spaltströmen, vollständig versperrbar ist.

Bei Abgasturboladern, deren Turbinenstufe eine radiale und eine diagonale Flut aufweist, wird durch die erfindungsgemäße Ausführung der Leitgitter nach Anspruch 9 eine Erhöhung der Flexibilität der Leistungsregelung des Abgasturboladers bei gleichzeitig verhältnismäßig einfachem Aufbau und hoher Betriebssicherheit im Vergleich zu bekannten Abgasturboladern erreicht.

Durch die vorteilhafte Ausgestaltung der Erfindung nach Anspruch 10 sind die geteilten Leitgitter durch die Abstimmung ihrer Gitterparameter, beispielsweise durch geeignete Wahl der Gitterteilung, des Schaufelprofils, des Schaufelwinkels und der Lage der Trennfläche zwischen dem feststehenden und dem verdrehbaren Leitgitterteil auf bevorzugte Betriebspunkte des Abgasturboladers einstellbar. Ferner ist auch der Winkel zwischen Schaufellängsachse und Leitgitterlängsachse (sog. Rakewinkel) variierbar, wodurch das Ablöseverhalten der Abgasströmung günstig beeinflußt werden kann. Über die Gitterparameter ist auch der Durchflußquerschnitt der geteilten Leitgitter in Abhängigkeit vom Drehwinkel des verdrehbaren Leitgitterteiles einstellbar.

Weitere Ausgestaltungen und Vorteile der Erfindung gehen aus den übrigen Unteransprüchen und der Beschreibung hervor.

In den Zeichnungen ist die Erfindung anhand eines Ausführungsbeispiels näher erläutert. Es zeigen:
- Fig. 1: einen Meridianschnitt eines Abgasturboladers mit einem erfindungsgemäßen Leitgitter,
- Fig. 2: einen durch die Linie II - II in Fig. 1 und Fig. 8 angedeuteten Teil einer Abwicklung einer ersten konstruktiven Ausgestaltung des erfindungsgemäßen Leitgitters für ein vollständig geöffnetes Leitgitter,
- Fig. 3: eine Darstellung analog Fig. 2 für ein teilweise abgeriegeltes Leitgitter,
- Fig. 4: eine Darstellung analog Fig. 2 für ein bis auf Spaltströme vollständig abgeriegeltes Leitgitter,
- Fig. 5: in einer Darstellung analog zu Fig. 2 eine zweite konstruktive Ausgestaltung des Leitgitters für ein vollständig geöffnetes Leitgitter,
- Fig. 6: eine Darstellung analog Fig. 5 für ein teilweise abgeriegeltes Leitgitter,
- Fig. 7: eine Darstellung analog Fig. 5 für ein bis auf Spaltströme vollständig abgeriegeltes Leitgitter,
- Fig. 8: einen Meridianschnitt eines Abgasturboladers analog Fig. 1 mit zwei geteilten Leitgittern, deren drehbare Leitgitterteile starr gekoppelt sind,
- Fig. 9: einen durch die Linie IX - IX in Fig. 8 angedeuteten Radialteilschnitt einer konstruktiven Ausgestaltung des erfindungsgemäßen radialen Leitgitters für ein vollständig geöffnetes Leitgitter und
- Fig. 10: eine Darstellung analog Fig. 9 für ein teilweise abgeriegeltes radiales Leitgitter.

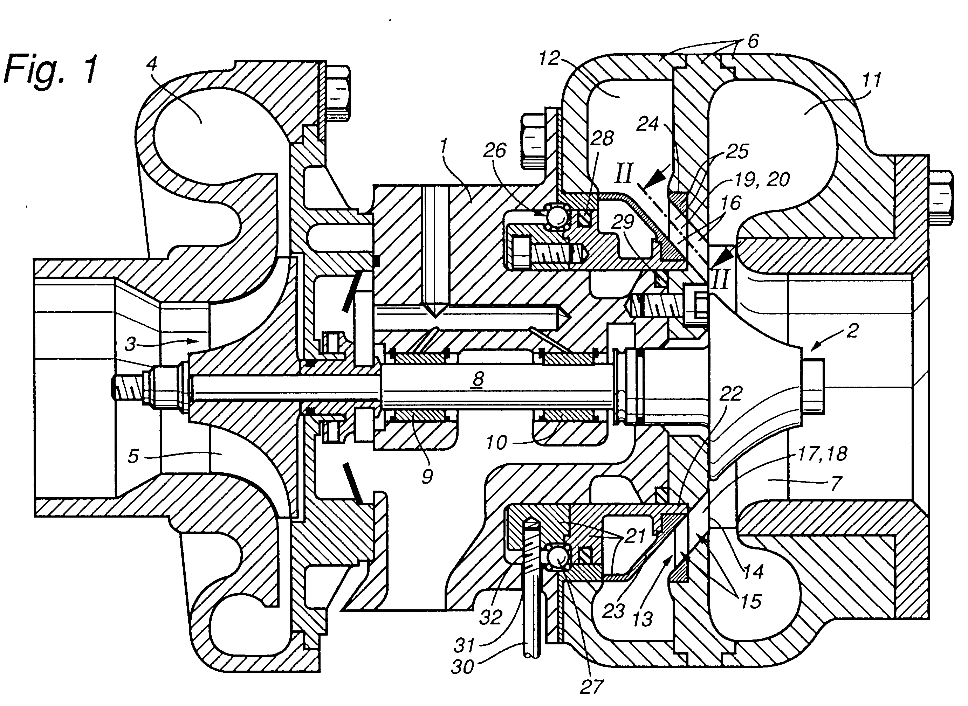

Fig. 1 zeigt einen Meridianschnitt eines Abgasturboladers, der ein Gehäuse 1, eine Turbinenstufe 2 und eine Verdichterstufe 3 in prinzipiell bekannter Weise umfaßt.

An dem Gehäuse 1 ist verdichterseitig ein einflutiger, spiralförmiger Leitkanal 4, der ein Radiallaufrad 5 der Verdichterstufe 3 umschließt, sowie turbinenseitig ein zweiflutiger, spiralförmiger Leitkanal 6, der ein radial-und diagonal durchströmtes Laufrad 7 der Turbinenstufe 2 umgibt, angeflanscht.

Radiallaufrad 5 und Laufrad 7 sitzen auf einer gemeinsamen Welle 8, die mit hydraulischen Radiallagern 9 und 10 in dem Gehäuse 1 gelagert ist.

Der zweiflutige, spiralförmige Leitkanal 6 besteht aus einer ersten Flut 11, deren Abgasstrom das Laufrad 7 radial beaufschlagt und einer zweiten Flut 12 mit einem ringdüsenförmigen Mündungsbereich 13, deren Abgasstrom das Laufrad 7 auf seiner wellenseitigen Stirnseite 14 diagonal anströmt.

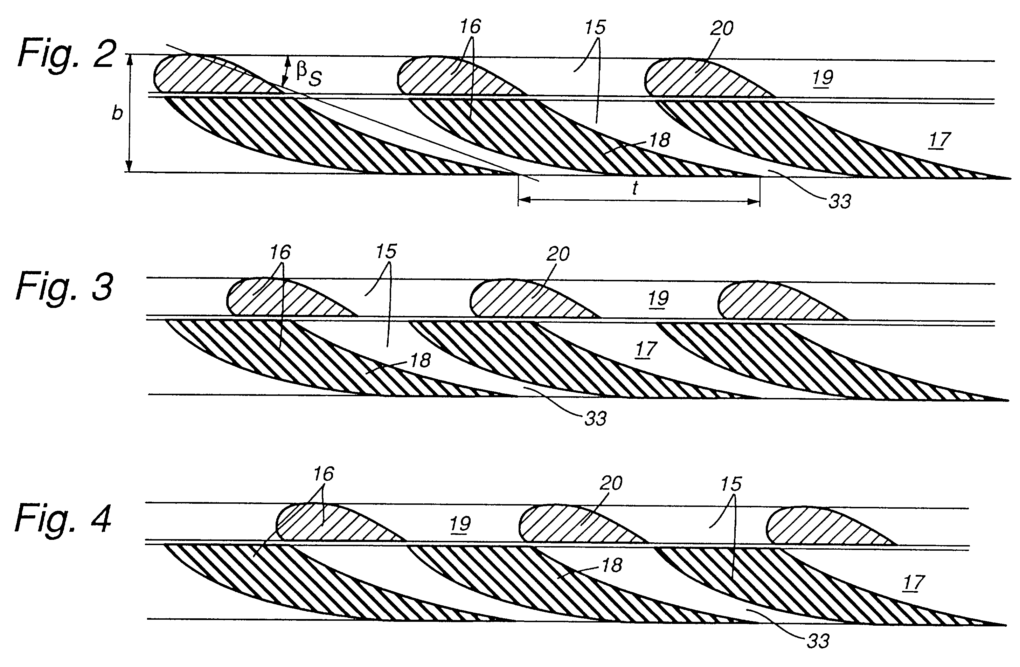

In dem ringdüsenförmigen Mündungsbereich 13 der zweiten Flut 12 befindet sich ein variables, kontinuierlich verstellbares, geteiltes Leitgitter 15 mit Leitschaufeln 16, die durch eine parallel zu einer Radialebene des Laufrades 7 verlaufende Ebene geteilt sind (siehe Fig. 2). Die geteilten Leitschaufeln 16 bilden das geteilte Leitgitter 15, das ein feststehendes Leitgitterteil 17 mit Leitschaufelteilen 18 und ein diesem zugeordnetes konzentrisch zur Rotationsachse des Laufrades 7 verdrehbares Leitgitterteil 19 mit Leitschaufelteilen 20 bilden, wobei das verdrehbare Leitgitterteil 19 anströmseitig und das feststehende Leitgitterteil 17 abströmseitig in dem Mündungsbereich 13 angeordnet ist.

Die Verdrehung des Leitgitterteiles 19 erfolgt über eine Nabe 21 mit einem Nabenstutzen 22. Auf dem Nabenstutzen 22 ist ein konusförmiges Nabenteil 23 befestigt, das zusammen mit dem Leitgitterteil 19 und einer Innenkegelringscheibe 24 einen Leitschaufelteilkranz 25 bildet.

Die Nabe 21 ist mit einem Drahtkugellager 26 mit Keramik-oder Stahlkugeln 27 im Gehäuse 1 gelagert.

Das Gehäuse 1 und die Nabe 21 ist mit Rechteckringen 28 und 29 zur Gasseite hin abgedichtet.

Die Verdrehung der Nabe 21 erfolgt über einen Stift 30, der über einen Schlitz 31 des Gehäuses 1 geführt und mit der Nabe 21 mittels eines Gewindes 32 fest verbunden ist.

Der Stift 30 ist mit einem nicht dargestellten Steller verbunden, der die Position der Nabe 21 und damit die Stellung des Leitschaufelteilkranzes 25 und des mit ihm verdrehbaren Leitgitterteiles 19 in Abhängigkeit von Betriebsparametern der Brennkraftmaschine regelt.

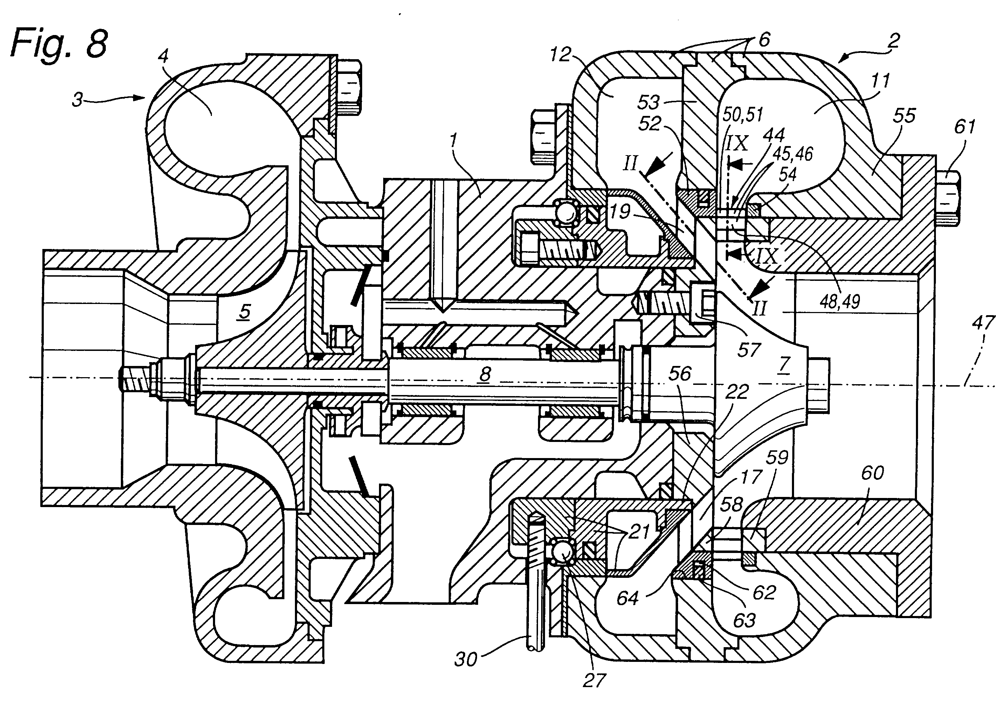

Die Fig. 2, 3 und 4 zeigen einen Teil einer Abwicklung des erfindungsgemäß parallel zu einer Radialebene des Laufrades 7 geteilten Leitgitters 15 für drei Gitterstellungen des verdrehbaren Leitgitterteils 19 gemäß Schnitt II - II aus Fig. 1 und Fig. 8.

Fig. 2 zeigt das Leitgitter 15 mit Strömungskanälen 33 und den Gitterparametern Schaufelwinkel βₛ, Schaufelgeometrie, Gitterteilung t und Gitterbreite b. In der gezeigten Darstellung ist das Leitgitter 15 vollständig geöffnet, was beispielsweise der Leitgitterstellung bei Vollast der Brennkraftmaschine entspricht.

In Fig. 3 ist eine Stellung des verdrehbaren Leitgitterteils 19 für einen Teillastbetrieb der Brennkraftmaschine dargestellt. Die Strömungskanäle 33 des Leitgitters 15 sind durch die Verdrehung des Leitgitterteils 19 teilweise abgeriegelt.

Fig. 4 zeigt ein bis auf Spaltströme vollständig abgeriegeltes Leitgitter 15. Die Abriegelbarkeit der Strömungskanäle 33 des Leitgitters 15 wird durch geeignet aufeinander abgestimmte Gitterparameter und Lage der Teilungsebene des Leitgitters 15 erreicht. In der Darstellung beträgt der drehbare Eintrittsbereich des Gitters bei den für Beschleunigungsgitter notwendigen relativ flachen Schaufelwinkeln βₛ in etwa 1/3 der Gitterbreite b. Die Hauptbeschleunigung der Strömung erfolgt in dem feststehenden Leitgitterteil 17.

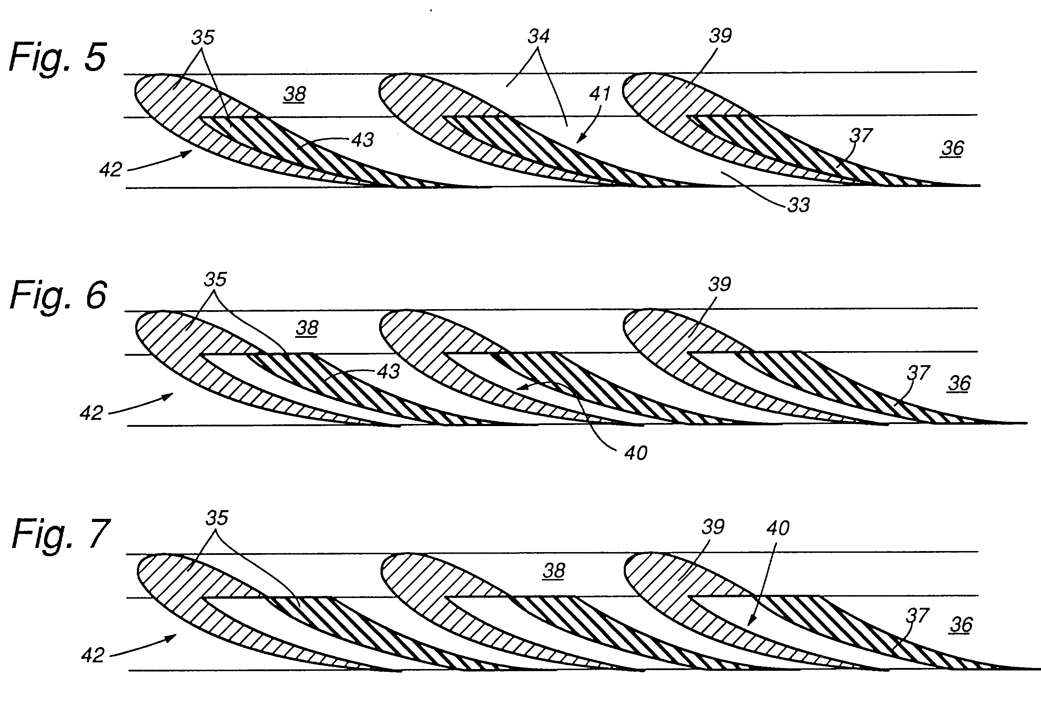

In den Fig. 5, 6 und 7 ist eine aerodynamisch günstige Ausführung eines geteilten Leitgitters 34 mit Leitschaufeln 35 für drei Gitterstellungen 'offen', 'teilweise abgeriegelt' und 'vollständig abgeriegelt' (analog zu Fig. 2, 3 und 4) dargestellt. Das Leitgitter 34 besitzt ein feststehendes Leitgitterteil 36 mit Leitschaufelteilen 37 und ein diesem zugeordnetes drehbares Leitgitterteil 38 mit Leitschaufelteilen 39.

Die Teilung der Leitschaufeln 35 erfolgt jeweils durch zwei sich schneidende Schnittflächen, wobei die eine Schnittfläche eine parallel zu einer Radialebene des Laufrades 7 verlaufende Ebene und die andere Schnittfläche in etwa parallel zu der Skelettfläche der jeweiligen Leitschaufel 35 ist.

Die Leitschaufelteile 37 des feststehenden Leitgitterteiles 36 sind jeweils durch Profilsegmente 43 gebildet und die Leitschaufelteile 39 des drehbaren Leitgitterteils 38 besitzen ein Leitschaufelprofil mit zu den feststehenden Leitschaufelteilen 37 kongruenten Leitschaufelausschnitten 40.

Die Leitschaufelausschnitte 40 befinden sich in dem drehbaren Leitgitterteil 38 auf der Druckseite 41 der Leitschaufeln 35. Die Leitschaufeloberfläche auf der Saugseite 42 der Leitschaufeln 35 ist spaltlos durchgängig ausgebildet.

Die gezeigte Anordnung des Leitgitters gemäß Fig. 1 kann selbstverständlich auch in einer einflutigen Turbinenstufe mit diagonaler Durchströmung des Laufrades eingesetzt werden.

In Fig. 8 ist ein Meridianschnitt eines Abgasturboladers analog zu Fig. 1 dargestellt. Gleiche Bauteile werden mit gleichen Bezugsziffern gekennzeichnet.

Die erste Flut 11 mit ihrem ringförmigen Mündungsbereich 44 beaufschlagt das Laufrad 7 radial. In dem ringförmigen Mündungsbereich 44 befindet sich ein variables, kontinuierlich verstellbares, geteiltes Leitgitter 45 mit Leitschaufeln 46, die durch eine konzentrisch zur Laufradlängsachse 47 liegende Zylindermantelfläche geteilt sind. Die geteilten Leitschaufeln 46 bilden das geteilte Leitgitter 45, das aus einem feststehenden Leitgitterteil 48 mit Leitschaufelteilen 49 und einem diesem zugeordneten, konzentrisch zur Laufradlängsachse 47 verdrehbaren Leitgitterteil 50 mit Leitschaufelteilen 51 besteht, wobei das verdrehbare Leitgitterteil 50 anströmseitig und das feststehende Leitgitterteil 48 abströmseitig in dem Mündungsbereich 44 angeordnet ist.

Die beiden verdrehbaren Leitgitterteile 19 und 50 sind an einem Verbindungsring 52 befestigt, der in einer Gehäusezwischenwand 53 drehbar geführt ist. In einer Nut 62 des Verbindungsringes 52 befindet sich ein Keramikdichtring 63, der den Verbindungsring 52 zur Gehäusezwischenwandinnenseite 64 abdichtet. Auf der dem Verbindungsring 52 abgewandten Seite des Leitgitterteiles 50 ist ein Lagerring 54 befestigt, der in einem Gehäuseteil 55 der Turbinenstufe 2 drehbar gelagert ist.

Eine Ringplatte 56 mit dem an ihrem Umfang angeordneten Leitgitterteil 17 ist mit Schrauben 57 am Gehäuse 1 befestigt. Auf der dem Verbindungsring 52 zugewandten Seite des feststehenden Leitgitterteiles 17 ist eine Kegelringscheibe 58 befestigt, mit der das feststehende Leitgitterteil 48 des geteilten Leitgitters 45 verbunden ist. Das feststehende Leitgitterteil 48 ist an seiner der Kegelringscheibe 58 abgewandten Stirnseite mit einem Zylinderring 59 verbunden, der an einem Konturring 60 befestigt ist, der mit dem Gehäuseteil 55 mit Schrauben 61 fest verbunden ist.
Somit sind die Ringplatte 56, die beiden feststehenden Leitgitterteile 17 und 48 und der Zylinderring 59 sowie die Kegelringscheibe 58 einstückig fest miteinander verbunden.

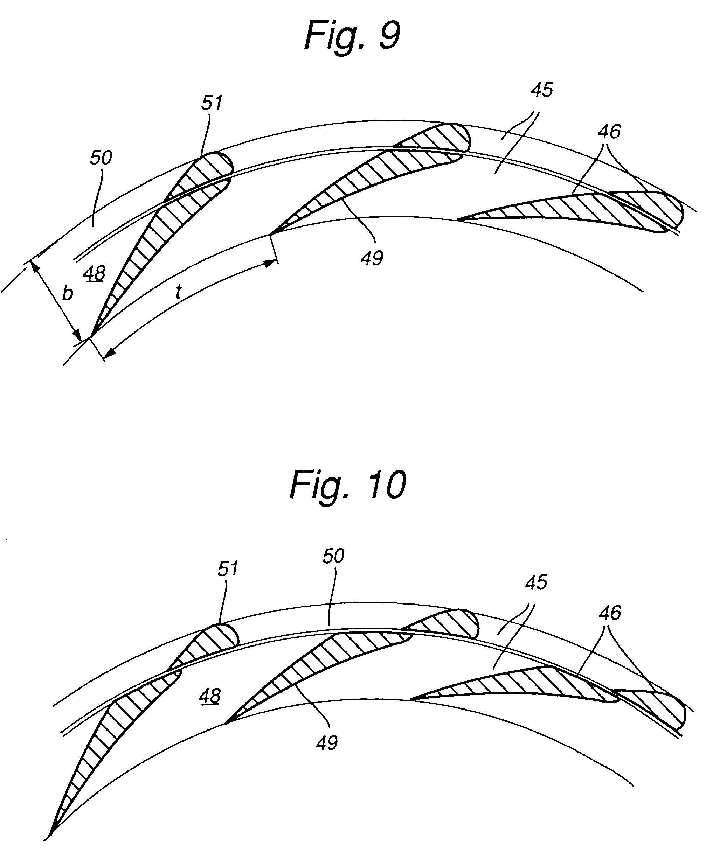

Die Fig. 9 zeigt einen durch die Linie IX - IX in Fig. 8 angedeuteten Radialteilschnitt einer konstruktiven Ausgestaltung des vollständig geöffneten geteilten Leitgitters 45.

In Fig. 10 ist das geteilte Leitgitter 45 in einer teilweise verriegelten Position dargestellt, also etwa der Stellung des Leitgitters 45 für den Teillastbetrieb der Brennkraftmaschine. Für diesen Betriebszustand wären also bei einer zweiflutigen Abgasturbine gemäß Fig. 8 die Leitgitterstellungen gemäß den Fig. 3 und 10 charakteristisch.

In einer weiteren Ausgestaltung der Erfindung kann das feststehende Leitgitterteil anströmseitig und das verdrehbare Leitgitterteil abströmseitig angeordnet sein.

## Patentansprüche

1. Abgasturbolader einer Brennkraftmaschine, dessen Turbinenstufe (2) mindestens eine spiralförmige, diagonale Flut (12) mit einem an ein Laufrad (7) der Turbinenstufe mündenden ringdüsenförmigen Mündungsbereich (13) umfaßt, in dem ein variables Leitgitter (15) mit Leitschaufeln angeordnet ist,
**dadurch gekennzeichnet,**
daß die Leitschaufeln (16,35) geteilt sind und ein geteiltes Leitgitter (15,34) mit einem feststehenden Leitgitterteil (17, 36) und einem diesem zugeordneten, konzentrisch zur Rotationsachse des Laufrades (7) verdrehbaren Leitgitterteil (19,38) bilden.

2. Abgasturbolader nach Anspruch 1,
**dadurch gekennzeichnet,**
daß das verdrehbare Leitgitterteil (19,38) anströmseitig und das feststehende Leitgitterteil (17,36) abströmseitig in dem Mündungsbereich (13) angeordnet ist.

3. Abgasturbolader nach Anspruch 1 oder 2,
**dadurch gekennzeichnet,**
daß die Breite des verdrehbaren Leitgitterteiles (19) in etwa ein Drittel der Gitterbreite (b) beträgt.

4. Abgasturbolader nach einem der Ansprüche 1 bis 3,
**dadurch gekennzeichnet,**
daß die Teilung der Leitschaufeln (16) durch eine parallel zu einer Radialebene des Laufrades (7) verlaufende Ebene erfolgt.

5. Abgasturbolader nach einem der Ansprüche 1 bis 3,
**dadurch gekennzeichnet,**
daß die Teilung der Leitschaufeln (35) jeweils durch zwei sich schneidende Schnittflächen erfolgt, wobei die eine Schnittfläche eine parallel zu einer Radialebene des Laufrades (7) liegende Ebene ist und die andere Schnittfläche in etwa parallel zu der Skelettfläche der jeweiligen Leitschaufel (35) ist.

6. Abgasturbolader nach Anspruch 5,
**dadurch gekennzeichnet,**
daß die Leitschaufelteile (37) des feststehenden Leitgitterteiles (36) jeweils durch Profilsegmente (43) gebildet sind und daß die Leitschaufelteile (39) des verdrehbaren Leitgitterteils (38) ein Leitschaufelprofil mit zu den feststehenden Leitschaufelteilen (37) kongruenten Leitschaufelausschnitten (40) aufweisen.

7. Abgasturbolader nach Anspruch 5 oder 6,
**dadurch gekennzeichnet,**
daß sich die Leitschaufelausschnitte (40) in dem verdrehbaren Leitgitterteil (38) auf der Druckseite (41) der Leitschaufeln (35) befinden und daß die Leitschaufeloberfläche auf der Saugseite (42) der Leitschaufeln (35) spaltlos durchgängig ausgebildet ist.

8. Abgasturbolader nach einem der Ansprüche 1 bis 7,
**dadurch gekennzeichnet,**
daß durch das verdrehbare Leitgitterteil (19,38) der Durchflußquerschnitt der Strömungskanäle (33) des Leitgitters (15,34) in Abhängigkeit von Betriebsparametern der Brennkraftmaschine regelbar ist.

9. Abgasturbolader nach einem der Ansprüche 1 bis 8,
**dadurch gekennzeichnet,**
daß bei einer Turbinenstufe (2), die neben der spiralförmigen, diagonalen Flut (12) eine spiralförmige, radiale Flut (11) aufweist, in beiden Mündungsbereichen (13,44) der Fluten (11,12) ein geteiltes Leitgitter (15,45) mit geteilten Leitschaufeln (16,46) angeordnet ist, wobei die Leitgitter (15,45) jeweils ein feststehendes Leitgitterteil (17,48) und ein diesem Zugeordnetes, konzentrisch zur Rotationsachse (47) des Laufrades (7) verdrehbares Leitgitterteil (19,50) aufweisen, wobei die verdrehbaren Leitgitterteile (19,50) starr gekoppelt sind.

10. Abgasturbolader nach einem der Ansprüche 1 bis 9,
**dadurch gekennzeichnet,**
daß die Gitterparameter der beiden Leitgitter (15,45) auf bevorzugte Betriebspunkte des Abgasturboladers abgestimmt sind.

## Claims

1. Exhaust-gas turbocharger of an internal-combustion engine, the turbine stage (2) of which comprises at least one spiral diagonal flow (12) with a mouth region (13) in the form of an annular nozzle, which opens onto an rotor (7) at the turbine stage and in which a variable guide blade cascade (15) having guide blades is arranged, characterized in that the guide blades (16, 35) are divided and form a divided guide blade cascade (15, 34) with a stationary guide-blade cascade part (17, 36) and with a guide-blade cascade part (19, 38) assigned to this and rotatable concentrically relative to the axis of rotation of the rotor (7).

2. Exhaust-gas turbocharger according to Claim 1, characterized in that the rotatable guide-blade cascade part (19, 38) is arranged on the onflow side and the stationary guide-blade cascade part (17, 36) on the flow-off side in the mouth region (13).

3. Exhaust-gas turbocharger according to Claim 1 or 2, characterized in that the width of the rotatable guide-blade cascade part (19) is approximately one third of the cascade width (b).

4. Exhaust-gas turbocharger according to one of Claims 1 to 3, characterized in that the division of the guide blades (16) takes place through a plane extending parallel to a radial plane of the rotor (7).

5. Exhaust-gas turbocharger according to one of Claims 1 to 3, characterized in that the division of the guide blades (35) takes place respectively by means of two intersecting sectional faces, one sectional face being a plane parallel to a radial plane of the rotor (7) and the other sectional face being approximately parallel to the skeleton face of the respective guide blade (35).

6. Exhaust-gas turbocharger according to Claim 5, characterized in that the guide-blade parts (37) of the stationary guide-blade cascade part (36) are respectively formed by profiled segments (43), and in that the guide-blade parts (39) of the rotatable guide-blade cascade part (38) have a guide-blade profile with guide-blade cutouts (40) congruent to the stationary guide-blade parts (37).

7. Exhaust-gas turbocharger according to Claim 5 or 6, characterized in that the guide-blade cutouts (40) in the rotatable guide-blade cascade part (38) are located on the delivery side (41) of the guide blades (35), and in that the guide-blade surface on the suction side (42) of the guide blades (35) is made continuous without a gap.

8. Exhaust-gas turbocharger according to one of Claims 1 to 7, characterized in that the throughflow cross-section of the flow channels (33) of the guide blade cascade (15, 34) can be regulated in dependence on operating parameters of the internal-combustion engine by means of the rotatable guide-blade cascade part (19, 38).

9. Exhaust-gas turbocharger according to one of Claims 1 to 8, characterized in that, in a turbine stage (2) which has a spiral radial flow (11) in addition to the spiral diagonal flow (12), a divided guide blade cascade (15, 45) having divided guide blades (16, 46) is arranged in the two mouth regions (13, 44) of the flows (11, 12), the guide blade cascades (15, 45) each having a stationary guide-blade cascade part (17, 48) and a guide-blade cascade part (19, 50) assigned to this and rotatable concentrically relative to the axis of rotation (47) of the rotor (7), the rotatable guide-blade cascade parts (19, 50) being coupled rigidly.

10. Exhaust-gas turbocharger according to one of Claims 1 to 9, characterized in that the cascade parameters of the two guide blade cascades (15, 45) are coordinated with preferred operating points of the exhaust-gas turbocharger.

## Revendications

1. Turbocompresseur à gaz d'échappement pour moteur à combustion interne, dont l'étage-turbine (2) comporte au moins une volute diagonale (12) en forme de spirale, pourvue d'une zone d'embouchure (13) en forme de buse annulaire débouchant sur un rotor (7) de l'étage-turbine et dans laquelle est disposée une grille directrice variable (15) pourvue d'aubes directrices, caractérisé en ce que les aubes directrices (16, 35) sont divisées et forment une grille directrice divisée (15, 34) comportant une partie de grille directrice fixe (17, 36) et une partie de grille directrice (19, 38), associée à cette dernière et pouvant tourner concentriquement à l'axe de rotation du rotor (7).

2. Turbocompresseur à gaz d'échappement selon la revendication 1, caractérisé en ce que la partie tournante de grille directrice (19, 38) est disposée dans la zone d'embouchure (13) du côté d'entrée d'écoulement, et la partie fixe de grille directrice (17, 36) du côté de sortie d'écoulement.

3. Turbocompresseur à gaz d'échappement selon la revendication 1 ou 2, caractérisé en ce que la largeur de la partie tournante de grille directrice (19) s'élève à environ un tiers de la largeur de grille (b).

4. Turbocompresseur à gaz d'échappement selon l'une des revendications 1 à 3, caractérisé en ce que la division des aubes directrices (16) est créée par un plan orienté parallèlement à un plan radial du rotor (7).

5. Turbocompresseur à gaz d'échappement selon l'une des revendications 1 à 3, caractérisé en ce que la division des aubes directrices (35) est produite respectivement par deux surfaces de division se coupant, une des surfaces de division étant un plan orienté parallèlement à un plan radial du rotor (7) tandis que l'autre surface de division est orientée à peu près parallèlement à la surface-squelette de l'aube directrice correspondante (35) .

6. Turbocompresseur à gaz d'échappement selon la revendication 5, caractérisé en ce que les parties d'aubes directrices (37) de la partie fixe de grille directrice sont constituées chacune par des segments profilés (43) et en ce que les parties d'aubes directrices ( 39) de la partie tournante de grille directrice ( 38) comportent un profil d'aubes directrices où les évidements (40) d'aubes directrices sont en congruence avec les parties fixes (37) d'aubes directrices.

7. Turbocompresseur à gaz d'échappement selon la revendication 5 ou 6, caractérisé en ce que les évidements (40) d'aubes directrices sont situés dans la partie tournante (38) de grille directrice sur le côté compression (41) des aubes directrices (35) et en ce que la surface des aubes directrices sur le côté-aspiration (42) desdites aubes (35) est réalisé continue sans intervalle.

8. Turbocompresseur à gaz d'échappement selon l'une des revendications 1 à 7, caractérisé en ce que la partie tournante de grille directrice (19, 38) permet le réglage de la section de passage des canaux d'écoulement (33) de la grille directrice (15, 34) en fonction de paramètres de fonctionnement du moteur à combustion interne.

9. Turbocompresseur à gaz d'échappement selon l'une des revendications 1 à 8, caractérisé en ce que, dans un étage-turbine (2) qui comporte à côté de la volute diagonale (12) en forme de spirale une volute radiale (11) en forme de spirale, il est prévu dans chacune des deux zones d'embouchure (13, 44) des volutes (11, 12) une grille directrice divisée (15, 45) comportant des aubes directrices divisées (16, 46), lesdites grilles directrices (15, 45) comportant chacune une partie fixe (17, 48) et une partie tournante (19, 50), associé à cette dernière et pouvant tourner concentriquement à l'axe de rotation (47) du rotor (7), les parties tournantes (19, 50) des grilles directrices étant accouplées rigidement.

10. Turbocompresseur à gaz d'échappement selon l'une des revendications 1 à 9, caractérisé en ce que les paramètres des deux grilles directrices (15, 45) sont adaptés à des points de fonctionnement avantageux du turbocompresseur à gaz d'échappement.
